# EUROPÄISCHE PATENTSCHRIFT

(11) **EP 1 571 914 B1**
(45) Veröffentlichungstag und Bekanntmachung des Hinweises auf die Patenterteilung: **13.08.2008**
(21) Anmeldenummer: 03776744.9
(22) Anmeldetag: 19.12.2003
(51) Int. Cl.: A23G 3/00

(54) **GUMMIELASTISCHER KONFEKT BASIEREND AUF STÄRKE**
STARCH-BASED RUBBER-ELASTIC CONFECTIONERY
CONFISERIE ELASTIQUE A BASE D'AMIDON

(30) Priorität: 20.12.2002 DE 10260963
(43) Veröffentlichungstag der Anmeldung: 14.09.2005
(73) Patentinhaber: InnoGEL AG, 6331 Hünenberg (CH)
(72) Erfinder: MÜLLER, Rolf, CH-8055 Zürich (CH); INNEREBNER, Federico, CH-8049 Zürich (CH)
(74) Vertreter: Frommhold, Joachim
(86) Internationale Anmeldenummer: PCT/CH2003/000832
(87) Internationale Veröffentlichungsnummer: WO 2004/056192

(56) Entgegenhaltungen:
- EP-A- 0 252 306
- EP-A- 0 360 046
- EP-A- 0 367 064
- EP-A- 0 390 960
- EP-A- 1 023 841
- EP-A- 1 342 417
- WO-A-00/44241
- WO-A-03/035026
- WO-A-03/035044
- US-A- 3 218 177
- US-A- 4 726 957
- US-A- 5 262 191

## Beschreibung

Die vorliegende Erfindung betrifft neuartigen gummielastischen Konfekt auf Basis einer Stärke-Matrix, wobei die Matrix eine vorliegende Stärke (VS) mit einer geringen bis verschwindenden Neigung zur Retrogradation aufweist.

### Stand der Technik

Herkömmlicher Konfekt auf Basis von Stärke kann in folgende zwei Gruppen eingeteilt werden:
1. Konfekt auf Basis von Stärke, wobei die eingesetzten Stärken wie bsw. hochamylosehaltige Stärken bei den verwendeten Konzentrationen eine ausgeprägte Gelbildung aufweisen. Solche Stärke Gele weisen ein engmaschig verknüpftes Netzwerk auf, wobei die Netzwerkelemente durch Homokristallite gebildet sind. Dabei resultieren hohe Gelfestigkeiten und Formstabilitäten, jedoch sind diese Gele wie praktisch alle bisherigen Stärke Gele ausgeprägt spröde und weisen nur geringe Bruchdehnungen von typischerweise < 50% auf, insbesondere im Vergleich mit Konfekt auf Basis von Gelatine.
2. Konfekt auf Basis von Stärke, wobei die eingesetzten Stärken bei den eingesetzten Konzentrationen keine nennenswerte Gelbildung aufweisen. Dabei handelt es sich um hochviskose Flüssigkeiten, welche nur in einem engen Bereich von Wassergehalten hohe Dehnungen > 100% zulassen. Die Stärke liegt dabei nahezu vollständig in einem amorphen Zustand vor. Zu dieser Gruppe von Konfekt gehören insbesondere bisherige Gummibärchen auf Basis von Stärke. Bei höheren Wassergehalten (d.h. bei höheren Luftfeuchtigkeiten) wie auch bei erhöhter Temperatur (Sommer) wird solcher Konfekt sehr weich und neigt zum zerfliessen. Bei tieferen Wassergehalten (d.h. bei tieferen Luftfeuchtigkeiten) wie auch bei niederen Temperaturen (Winter) wird solcher Konfekt vergleichsweise hart. Die Textureigenschaften unterscheiden sich qualitativ und quantitativ deutlich von Gelatine Gummibärchen, insbesondere konnte die typisch gummielastische Eigenschaft von Gelatine mit Stärke Substituten bisher nicht erreicht werden. Besonders störend ist ausserdem die Klebrigkeit dieser Produkte (Kleben an den Zähnen)

Geleezuckerwaren und Gummibonbons wie die bekannten Gummibärchen werden heute mangels geeigneter Alternativen noch vorwiegend auf Basis von Gelatine hergestellt. Ein Ersatz von Gelatine in Lebensmitteln ist jedoch wünschenswert, da Gelatine als tierisches Produkt und infolge der BSE Problematik zunehmend in Verruf geraten ist. Gelatine freier Konfekt wird entsprechend dem allgemeinen Trend hin zu nicht tierischen Produkten von den Verbrauchern zunehmend verlangt und ist auch für Moslems und Juden wünschenswert, da diese Konsumentengruppen Konfekt, welcher zumeist auf Schweine Gelatine basiert, nicht verzehren dürfen.

Eine weitere Alternative zu Gelatine Gummibonbons basiert auf Pektin, doch ist Pektin einerseits vergleichsweise teuer und andererseits weisen Pektin Gummibonbons ebenfalls nicht die gewünschte Konsistenz sowie einen unerwünschten Eigengeschmack auf.

Im Bereich der Gelee Zuckerwaren wird ebenfalls Gelatine eingesetzt, sowie Agar und Pektin. Agar ist wie Pektin im Vergleich mit Stärke um ein Mehrfaches teurer, sodass Gelee Zuckerwaren basierend auf Stärke eine vielversprechende Lösung darstellen, vorausgesetzt die erwünschte elastische Konsistenz der Produkte ist gegeben.

Die WO 00/44241 beschreibt Stärkemischungen, enthaltend eine erste Fraktion bestehend aus vernetzter Stärke und eine zweite Fraktion bestehend aus depolymerisierter Stärke, wobei die Stärkemischungen wenigstens einen Teil der Gelatine in Lebensmitteln, insbesondere bei Konfekt-Artikeln (Jelly Gum Confections), ersetzten können. Eine typisches Produkt, "Wein-Gummi", wird erhalten, indem Zucker, Glucose-Sirup und die Stärken kontinuierlich oder im Batch-Verfahren aufgekocht werden und die Mischung auf rund 75% Trockensubstanz eingedickt, evakuiert und gekühlt wird. Anschliessend werden Farbe, Aroma und Säure zugemischt. Die so erhaltene Lösung wird dann analog zur Verarbeitung von Gelatine-Konfekt, im klassischen Mogul-Verfahren zu geformten Produkten gegossen, wobei als Form Puder-Stärke verwendet wird.

Die US 4,726,957 beschreibt die Herstellung von Jelly Gum Confekt auf Basis von Stärke im Mogul-Verfahren. Durch den Einsatz einer Säure- oder Enzym-konvertierten hochamylosehaltigen Stärke (65 - 80% Amylose) werden einerseits eine niedrige Viskosität der Mischung der Stärke mit den anderen Zutaten von Jelly Gum Konfekt (hauptsächlich Zucker, Glucose-Sirup, Wasser) erhalten und andererseits ein schnelles Gelierverhalten sowie hohe Gelfestigkeiten erhalten.
Eine niedrige Viskosität der Mischung ist Voraussetzung für die Giessbarkeit. Eine Reduktion der Viskosität ermöglicht ein optimiertes Verfahren, perfektere Formen und reduziert die Fadenbildung zwischen der Giess-Düse und der in der Form deponierten Mischung. Die Einstellung einer tiefen Viskosität wird durch die Säure- oder Enzym-Konvertierung der hochamylosehaltigen Stärke erreicht. Die dabei entstehenden Fragmente der Stärke sind vorwiegend linear, da eine hochamylosehaltige Stärke eingesetzt wurde. Daraus resultiert ein optimales Kristallisationsverhalten, d.h. eine hohe Gelfestigkeit. Da die Fragmente gegenüber der Amylose ein reduziertes Molekulargewicht aufweisen und die Konzentration der Stärke infolge der reduzierten Viskosität erhöht werden kann, verläuft die Gelierung zusätzlich beschleunigt ab.

Die EP 0 390 960 beschreibt Verbesserungen bei der Herstellung von stärkehaltigen gelierten Produkten wie Jelly Gum Konfekt mittels Extrusion. Indem eine sprühgetrocknete, pregelatinisierte, hochamylosehaltige Stärke mit mindestens 40% Amylose eingesetzt wird, kann das Extrusionsverfahren optimiert werden. Es kann bei tiefer Temperatur verfahren werden, womit z.B. das Problem der Karamelisierung des Zuckers gelöst wird, und der Wassergehalt des extrudierten Produkts kann reduziert werden, bzw. auf den gewünschten Endwassergehalt eingestellt werden, so dass keine nachträgliche Trocknung notwendig ist.

Die US 5,262,191 beschreibt Verbesserungen betreffend der Herstellung von Jelly Gum Konfekt mittels der Mogul-Technologie. Als texturgebende, gelierende Komponenten werden zwei Stärken eingesetzt, eine bei sehr tiefem pH (<1) säurekonvertierte hochamylosehaltige Stärke mit einem Amylosegehalt von mindestens 50% und eine übliche dünnkochende Stärke oder eine oxidierte Stärke mit einem Amylosegehalt von < 35%. Somit können glänzende, durchscheinende Produkte erhalten werden. Bei der Herstellung tritt dann keine Fadenbildung (Tailings) auf, und die Zeit zwischen dem Giessen in die Mogul-Form und dem Verpacken (Gelierzeit, Trocknungszeit) kann verkürzt werden.

Die EP 0 367 064 beschreibt eine verbesserte Methode zur Herstellung von Jelly Gum Konfekt, wobei eine Stärke eingesetzt wird, die nach Entzweigung teilweise oder vollständig entzweigtes Amylopektin, sowie mindestens 5%, vorzugsweise bis 80% kurzkettige Amylose aufweist. Diese Stärke ergibt in Mischung mit den anderen Konfekt-Komponenten eine tiefe Viskosität, wodurch die Verarbeitung durch Giessen verbessert wird. Ausserdem können im Vergleich mit nicht-konvertierten hochamylosehaltigen Stärken tiefere Kochtemperaturen eingesetzt werden.

Die EP 0 360 046 beschreibt ein verbessertes Mogul-Giessverfahren zur Herstellung von Jelly Gum Konfekt. Als texturgebende Komponente wird eine hochamylosehaltige Stärke mit einem Amyosegehalt von mindestens 40% alleine oder in Kombination mit einer konvertierten Stärke eingesetzt. Durch die vorgängige Pregelatinisierung, wobei neue Verfahren eingesetzt werden, kann die Konfekt-Mischung vorteilhaft bei tieferer Temperatur gekocht werden, ohne Einbussen bei der Produktqualität in Kauf nehmen zu müssen.

Die US 3,218,177 beschreibt den vorteilhaften Einsatz von hochamylosehaltiger Stärke in Jelly Gum Konfekt, wobei der Amylosegehalt der Stärke im Bereich von 40 bis 75% liegt und die Stärke während der Verarbeitung zusammen mit den anderen Konfekt-Komponenten aufgekocht und bei Temperaturen > 135°C gelatinisiert wird. Die Formgebung erfolgt durch Giessen, wobei das übliche Mogul-Verfahren eingesetzt wird oder auch Metall-Formen zum Einsatz kommen können.

Die EP 1 023 841 beschreibt den teilweisen bis vollständigen Ersatz von Gelatine bei Konfekt durch den Einsatz von oxidierter Stärke, vorzugsweise in Kombination mit Gummi Arabicum. Bei der Oxidation von Stärke wird diese hydrolysiert, und es findet eine Ringöffnung sowie Carboxylierung statt. Dadurch wird einerseits das Molekulargewicht reduziert, wodurch die Viskosität einer Lösung der Stärke reduziert wird, und andererseits wird durch die bei der Carboxylierung entstandenen Irregularitäten die Kristallisationsneigung der Stärke reduziert. Die Herstellung der Konfekt-Mischung und die Formgebung erfolgen mittels konventioneller Methoden. Am Rande wird unter "more elaborate manufacturing processes" auch Extrusion zur Formgebung erwähnt.

### Kurze Beschreibung der Erfindung

Die Aufgabe der Erfindung wird durch ein Konfekt, ein Verfahren zu dessen Herstellung sowie dessen Verwendung gemäss der Ansprüche 1, 10 und 11 gelöst.

Es wurde gefunden, dass Konfekt auf Basis einer Stärke-Matrix mit gummielastischen Eigenschaften und hohen bis sehr hohen Bruchdehnungen, insbesondere mit Texturen die mit den Texturen von auf Gelatine basierenden Produkten sehr gut vergleichbar sind, erhalten werden können. Die Lösung liegt dabei zwischen den zwei Hauptgruppen von Konfekt auf Stärke-Basis, welche eingangs im Stand der Technik beschrieben sind. Sie besteht aus einer Stärke-Matrix, welche einerseits einen hohen amorphen Anteil und andererseits ein definiertes Stärke-Netzwerk mit niederer Netzwerkdichte aufweist. Anschaulich weist die erfindungsgemässe Stärke-Matrix mit dem amorphen Anteil eine Strukturkomponente auf, welche wie dies bei bisherigen Gummibärchen auf Stärke-Basis der Fall ist, ein viskoses Verhalten zeigt. Indem ein definiertes und minimales Netzwerk eingestellt wird, kann diese Struktur jedoch verstärkt und können gummielastische Eigenschaftsmerkmale eingeführt werden. Das Netzwerk weist dabei gegenüber bisherigem geliertem Konfekt auf Basis von Stärke eine deutlich reduzierte Netzwerkdichte auf. Die Verknüpfungspunkte des Netzwerks sind einerseits ausreichend, um ein viskoses Fliessen des amorphen Anteils der Struktur zu verhindern und andererseits ist die Netzwerkdichte gering, bzw. sind die Verbindungselemente zwischen den Verknüpfungspunkten lang genug, sodass hohe Deformationen auf die Struktur appliziert werden können, ohne dass das Netzwerk zerrissen wird. Die Verbindungselemente befinden sich dabei im unbelasteten Zustand der Matrix in einem Zustand hoher Entropie bzw. in einem Knäuel artigen Zustand und können bei Belastung gestreckt werden. Die Rückstellkraft ist vergleichbar wie bei Gummi in der Entropieelastizität begründet.

Die Erfindung bezieht sich daher im engeren Sinne auf die Herstellung solcher definierter Netzwerke mit gummielastischen Eigenschaftsmerkmalen. Stärke-Makromoleküle sind gegenüber den Proteinen, welche bei Gelatine ein Netzwerk ausbilden vergleichsweise rigide und starr, wodurch die Einstellung von gummielastischem Verhalten erschwert wird. Diese Problematik kann aber entschärft werden, wenn grosse Stärke-Makromoleküle eingesetzt werden und/oder die Makromoleküle modifiziert, insbesondere substituiert werden. Indem bsw. Hydroxylgruppen der Anhydroglucose Einheiten von Stärke-Makromolekülen bsw. durch Hydroxypropylierung verlängert werden, entstehen zusätzliche Freiheitsgrade des Makromoleküls, wodurch die Beweglichkeit zunimmt.

Es wurde gefunden, dass die Vorteile von Konfekt basierend auf herkömmlichen Stärke Gelen und die Vorteile von Konfekt basierend auf viskoser bzw. amorpher Stärke ohne die jeweiligen Nachteile erhalten werden können wenn die Stärke-Matrix:
- eine vorliegende Stärke (VS) mit einer geringen bis verschwindenden Neigung zur Retrogradation aufweist;
- die VS einen Polymerisationsgrad von mehr als 1000 hat;
- die VS einen Amylosegehalt in % von weniger als 20 hat und/oder eine modifizierte, insbesondere substituierte Stärke ist; wobei
- die Herstellung des Konfektes durch Formextrusion erfolgt.

### Ausführliche Beschreibung der Erfindung

Indem entsprechend A eine hochmolekulare Stärke mit geringer bis verschwindender Neigung zur Retrogradation eingesetzt wird, wobei es sich dabei bsw. um eine Waxy-Stärke oder um eine modifizierte Stärke handeln kann, wird einerseits eine niedrige bis verschwindende Netzwerkdichte erhalten, wodurch bei niedriger Netzwerkdichte kristalline oder teilkristalline Fixierungspunkte eingeführt werden, sodass ein viskoses Fliessen verhindert wird und andererseits entropieelastisches Verhalten ermöglicht wird, resultierend in hoher Dehnbarkeit. Vorteilhaft beim Einsatz einer VS mit geringer Neigung zur Retrogradation und notwendig bei verschwindender Neigung zur Retrogradation ist die Kombination der VS mit einer NS. Die NS ist dabei niedermolekular und weist gute Kristallisationseigenschaften auf und kann mit der VS gemischte Kristallite (Heterokristallite) ausbilden, wobei die Verknüpfungen zwischen den Kristalliten durch die VS gebildet werden. Der Einsatz der NS hat den bedeutenden Vorteil, dass einerseits die resultierende Netzwerkdichte durch den eingesetzten Anteil der NS präzise eingestellt werden kann und andererseits dieses Netzwerk infolge des geringen Molekulargewichts der NS und der damit assoziierten, gegenüber hochmolekularen Stärken deutlich erhöhten Kristallisationsgeschwindigkeit sehr schnell gebildet wird, was für den Herstellungsprozess vorteilhaft ist. Ein weiterer Vorteil der niedermolekularen NS besteht darin, dass über deren Molekulargewicht die Grösse der Heterokristallite beeinflusst, insbesondere minimiert werden kann. Dies ist einerseits von Bedeutung für die Transparenz, da Kristallite mit Abmessungen von mindestens der Grössenordnung der Wellenlänge von sichtbarem Licht zu intransparenz bzw. Opazität führen. Andererseits sind kleinere Kristallite, welche zu fein strukturierten Netzwerken führen, auch für gummielastisches Verhalten vorteilhaft (reduzierte Spannungsrelaxation). Darüber hinaus bedeutet der Einsatz von NS grundsätzlich einen vergrösserten Spielraum der Möglichkeiten sowohl hinsichtlich des Bereichs der einstellbaren Strukturen und damit verbunden des Bereichs der einstellbaren Eigenschaftsprofile, als auch betreffend der Herstellungsverfahren.

Wenn entsprechend B mindestens eine VS mit reduziertem Molekulargewicht und mit geringer bis verschwindender Neigung zur Retrogradation eingesetzt wird, ist der zusätzliche Einsatz einer NS für die Ausbildung von gummielastischen Netzwerken nicht optional, sondern notwendig. Die genannten Vorteile beim Einsatz von NS treffen auch hier zu. Allerdings weisen die entsprechend B erhaltenen Netzwerke gegenüber den entsprechend A erhaltenen Netzwerken reduzierte Bruchdehnungen auf. Die Bruchdehnungen nehmen dabei mit dem Molekulargewicht der VS ab. Allerdings kann dem durch hohe Modifizierungsgrade der VS entgegengewirkt werden. Vorteile hingegen ergeben sich durch die ebenfalls reduzierte Viskosität der Konfekt-Masse bei der Verarbeitung bsw. bei den Giessverfahren. Ausserdem muss eine reduzierte Bruchdehnung nicht nachteilig sein, Gelee-Konfektbsw. weist gegenüber Gummibonbons eine deutlich kürzere Textur auf, welche somit entsprechend B ebenfalls eingestellt werden kann.

Entsprechende den Erfordernissen der angestrebten Textur und des ausgewählten Herstellungsverfahrens sind auch Lösungen zwischen A und B vorteilhaft. Bsw. kann eine VS nach A mit einer VS nach B in beliebigen Verhältnissen gemischt werden, wodurch sich ein weiter Bereich hinsichtlich der resultierenden Texturen und der Viskosität der Konfekt-Masse während der Verarbeitung ergibt.

Der Anteil AN an den mechanischen Eigenschaften wie bsw. am E-Modul, der auf das Netzwerk und dessen mechanische Eigenschaften zurückzuführen ist, zeigt eine nur geringe Abhängigkeit vom Wassergehalt, d.h. es resultiert ein Plateau in Funktion der relativen Luftfeuchtigkeit RH, während der Anteil A_{A} der auf die amorphe Stärke-Phase zurückzuführen ist eine stark ausgeprägte Abhängigkeit vom Wassergehalt aufweist. Bei Temperaturen unterhalb der Glasübergangstemperatur Tg dominiert der Anteil A_{A} die mechanischen Eigenschaften, während oberhalb Tg der Anteil AN dominant ist, wobei ein Quasiplateau resultiert. Die Lage des Quasiplateaus entlang der Achse RH kann daher durch die Parameter welche Tg beeinflussen eingestellt werden, insbesondere durch Weichmacher wie Polyole wie bsw. Glycerin, Sorbitol, Maltitol. Auch Zucker und Zuckerarten sind diesbezüglich wirksam, jedoch weniger ausgeprägt als Polyole. So liegt das Quasiplateau bei tiefem Polyol-Gehalt bei hohen relativen Luftfeuchtigkeiten RH, während es bei hohem Polyol-Gehalt zu tiefen RH ausgedehnt werden kann.

Das Niveau des Quasiplateaus wird zum einen ebenfalls durch den Gehalt an Weichmacher bestimmt, wobei eine Erhöhung des Weichmachergehalts das Niveau erniedrigt. Zum anderen wird das Niveau durch die Netzwerkdichte bestimmt, wobei eine Erhöhung der Netzwerkdichte das Niveau anhebt. Ausserdem wird das Niveau auch durch die Wahl der VS festgelegt (Ursprung, Molekulargewicht, Amylosegehalt, Modifizierung, Grad der Modifizierung).

Die vorliegende Erfindung ermöglicht einen weiten Bereich von Stärke-Matrices mit gummielastischem Verhalten, die mit kurzer bis langer Textur erhalten und für verschiedene Konfekt-Artikel vielseitig eingesetzt werden kann, wobei die Stärke-Matrices mit den für einen jeweiligen Konfekt typischen Stoffen wie Zucker, Zuckerarten, Polyolen, Aromen, Additiven etc. beladen werden kann und dabei und folgende vorteilhafte Charakteristika aufweist:
1. Ein gummielastisches Verhalten, wobei der Grad der Gummielastizität durch verschiedene Parameter der Rezeptur und des Verfahrens, insbesondere durch die Art und den Anteil der NS definiert eingestellt werden kann. Insbesondere kann auch die Gummielastizität, welche für Gelatine typisch ist, erhalten werden.
2. Ein Plateau des E-Moduls in Funktion der relativen Luftfeuchtigkeit RH, wobei das Niveau des Quasiplateaus entlang der Achse des E-Moduls, d.h. vertikal eingestellt werden kann und die Lage des Quasiplateaus entlang der Achse der relativen Luftfeuchtigkeit RH, d.h. horizontal eingestellt werden kann. Infolge des Plateaus werden zu hohen Luftfeuchtigkeiten hin die Textureigenschaften stabilisiert, d.h. es resultieren reduzierte Schwankungen der Produkteigenschaften bei Veränderungen der Temperatur und der Luftfeuchtigkeit.
3. Bruchdehnungen, welche nahezu den Bruchdehnungen von auf Gelatine basiertem Konfekt entsprechen und ausserdem auf die Erfordernisse spezifischer Konfekt-Produkte angepasst werden können (kurze bis lange Textur).
4. Die Transparenz kann sowohl opak, als auch semitransparent und transparent eingestellt werden.
5. Die Brucheigenschaften können von zäh bis spröde (glasig) eingestellt werden.
6. Die Oberflächeneigenschaften können ohne Hilfsstoffe von klebrig bis nicht klebrig eingestellt werden.
7. Die Herstellung kann mit den im Bereich Konfekt gängigen Methoden erfolgen, bsw. mittels Giesstechniken (Mogultechnik) oder Formextrusion. Ausserdem kann die Herstellung auch mittels Spritzgusstechniken erfolgen.

Es wird darauf hingewiesen, dass die erfindungsgemässe Stärke-Matrix mit weiteren Stoffen, die als Struktur gebende Komponenten für Konfekt eingesetzt werden, kombiniert werden kann, bsw. mit Proteinen und Pektinen oder Polysaccharaiden wie Agar, Gummi Arabikum, Carrageenan, Johannisbrotkernmehl, Xanthan und dergleichen. Ausserdem weist der erfindungsgemässe Konfekt infolge der darin enthaltenen Stärke Kristallite einen prebiotisch wirksamen Anteil auf.

### Vorliegende Stärken (VS)

Vorliegende Stärken können beliebigen Ursprungs sein, vorausgesetzt sie weisen eine geringe Neigung zur Retrogradation auf. Sie können sowohl nativ als auch modifiziert sein.

Um eine ausreichende Entropieelastizität der erfindungsgemässen Stärke-Matrices zu erhalten, werden VS mit Polymerisationsgraden DPn > 150, vorzugsweise > 300, noch bevorzugter > 500, insbesondere > 750, am bevorzugtesten > 1000 eingesetzt.

Von den nativen Stärken werden als VS Stärken mit einem Amylosegehalt von < 20%, vorzugsweise < 15%, noch bevorzugter < 10%, insbesondere < 5%, am bevorzugtesten Waxy-Stärke wie bzw. Waxy-Reis, Waxy-Mais, Waxy-Hirse oder Waxy-Kartoffel eingesetzt.

Für den Einsatz als VS sind weiter modifizierte Stärken, insbesondere durch Substitution gegenüber Retrogradation stabilisierte Stärke wie bzw. acetylierte, hydroxypropylierte, hydroxyethylierte, phosphorylierte, oxidierte, oxidierte-acetylierte Stärken oder die entsprechenden zusätzlich chemisch vernetzte Stärken (Distärkephosphat, Distärkeadipat) geeignet. Im Allgemeinen nimmt die Eignung dieser Stärken mit dem Grad der Modifikation zu.

Bei hohen Substitutionsgraden, bei Waxy- oder Heterowaxy-Stärken ist die Neigung zur Retrogradation soweit reduziert, dass bei den eingesetzten Konzentrationen keine Netzwerke mehr gebildet werden können, welche gummielastisches Verhalten und ein Plateau des E-Moduls induzieren können. Andererseits weisen solche Stärken, insbesondere Stärken mit hohen Substitutionsgraden ein besonders ausgeprägtes und vorteilhaftes Dehnvermögen auf. Durch Kombination solcher VS mit geeigneten NS können jedoch auch auf Basis dieser Stärken vorteilhafte Netzwerke erhalten werden, wobei diese Netzwerke dann mindestens teilweise durch Heterokristallisation von VS mit NS entstehen.

### Netzwerkfähige Stärken (NS)

Da es auf Basis einer amorphen Phase allein nicht möglich ist, ein gummielastisches Verhalten einzustellen und dieses Verhalten über einen weiten Bereich der RF zu stabilisieren, wird ein definiertes Netzwerk eingeführt, wodurch die Struktur verstärkt und ein gummielastisches Verhalten ermöglicht wird. Bevorzugt werden Netzwerke, welche mit der amorphen Phase gekoppelt sind, erzeugt. Diese Kopplung kann durch eine geeignete Auswahl von NS und durch eine Abstimmung der NS mit der VS bei geeigneten Verfahrensbedingungen erreicht werden.

Als NS werden Stärken enthaltend oder bestehend aus Amylosen eingesetzt. Die Amylosen können sowohl linear als auch verzweigt und gegebenenfalls modifiziert sein. Beispiele für NS sind Amylosen aus nativen Stärken, insbesondere Amylosen erhalten durch Fraktionierung von Stärken mit einem Amylosegehalt > 23%, modifizierte Amylosen, insbesondere substituierte Amylosen oder hydrolysierte Amylosen, synthetische Amylosen, Getreidestärken, Erbsenstärken, hochamylosehaltige Stärken, insbesondere mit einem Amylosegehalt > 30, vorzugsweise > 40, noch bevorzugter > 60, am bevorzugtesten > 90, hydrolysierte Stärken, insbesondere hydrolysierte hochamylosehaltige Stärken, gelierende Dextrine, Fluidity-Stärken, mikrokristalline Stärken, Stärken aus dem Bereich der fat replacer. Ausserdem können NS auch eine intermediate fraction aufweisen, wie sie beispielsweise in hochamylosehaltigen Stärken enthalten sind und durch Fraktionierung erhalten werden können. Bezüglich ihrer Struktur und Eigenschaften liegt die intermediate fraction zwischen Amylose und Amylopektin.

Der Polymerisationsgrad der NS ist vorteilhaft < 300, vorzugsweise < 150, insbesondere < 100, noch bevorzugter < 75, am bevorzugtesten < 50.

Für Amylose ist die Unterscheidung in Long Chain Amylose (LCA) mit DPn > 100 und Short Chain Amylose (SCA) mit DPn < 100 üblich. Netzwerkfähige Stärken können LCA und/oder SCA aufweisen, bevorzugt werden SCA.

### Short Chain Amylose (SCA)

Beispiele für SCA sind Amylodextrine, linear Dextrine, Nägeli-Dextrine, Lintnerisierte Stärken, Erythrodextrine oder Achrodextrine, welche verschiedene Bezeichnungen und Untergruppen von SCA darstellen.

SCA kann bspw. durch Hydrolyse von LCA, LCA-Amylopektin Mischungen oder Amylopektin-Mischungen erhalten werden. Für vorteilhafte Netzwerke besonders geeignete SCA wird bspw. durch Hydrolyse von Stärken stammend von Wurzel und Knollen oder von Heterowaxy- oder Waxy-Stärken erhalten. Die Hydrolyse kann chemisch erfolgen wie bspw. Säurehydrolyse und/oder enzymatisch wie bspw. mittels Amylasen oder Kombinationen von Amylasen (alpha-Amylase, beta-Amylase, Amyloglucosidase, isoamylase oder Pullulanase). Amylosehaltige Stärken werden durch kombinierte Säure/Enzym-Hydrolyse als SCA erhalten, wobei die beiden Hydrolysen gleichzeitig oder nacheinander erfolgen können. Davon abhängig können unterschiedliche Typen von SCA ausgehend von derselben Stärke erhalten werden. Darüber hinaus werden die Charakteristika von SCA auch vom Zustand der nativen Stärke während der Hydrolyse, bspw. durch den Quellgrad der Stärkekörner beeinflusst. Daher steht eine breite Palette von geeigneter SCA zur Verfügung. Weitere Typen können durch Säure/Enzym-Hydrolyse oder Enzym-Hydrolyse ausgehend von Waxy-Stärken erhalten werden, wobei SCA-Hydrolysate mit DPn typischerweise um 22 erhalten werden, welche für die vorliegende Erfindung besonders geeignet sind.

### Long Chain Amylose (LCA)

Die in nativer Stärke enthaltene Amylose ist üblicherweise LCA mit DPn > 100. Der Polymerisationsgrad DPn von LCA kann jedoch beispielsweise durch Säure-Hydrolyse und/oder enzymatische Hydrolyse und/oder Oxidation auf Werte < 100 reduziert werden, sodass entsprechend modifizierte native Stärken auch SCA aufweisen können.

Zahlreiche Verfahren zur Herstellung von SCA, LCA und Mischungen von SCA und LCA sind im Stand der Technik beschrieben. Beide Amylosetypen sind einerseits in reiner Form erhältlich, sowie in verschiedenen, gegebenenfalls hydrolysierten kommerziellen Stärken zu unterschiedlichen Anteilen enthalten.

### Vorteilhafte Netzwerke

Die strukturellen Voraussetzungen zur Kopplung des Netzwerks mit der amorphen bzw. vorwiegend amorphen Phase der VS sind durch die Kettenlängen CLw (A-AP) der A-Seitenketten der Amylopektin Fraktion und durch die Kettenlängen der Amylose Fraktion gegeben. Die Kettenlängen CLw (A-AP) von A-Seitenketten von Amylopektin liegen für Amylopektine aus Stärken mit einem Amylosegehalt < 30 im Bereich von rund 10 - 20, während hochamylosehaltige Stärken etwas höhere Kettenlängen CLw aufweisen. Amylosen hingegen können auch sehr viel höhere Kettenlängen CLw (AM) aufweisen. Für Long Chain Amylosen (LCA) liegen Kettenlänge CL (LCA) typischerweise im Bereich von 100 - 1000, wobei Wurzel- und Knollen-Stärken deutlich höhere Kettenlängen aufweisen als Getreidestärken. Für Short Chain Amylosen (SCA) sind die Kettenlängen CL (SCA) < 100 und in der Regel von etwa derselben Grösse wie die Polymerisationsgrade DP (SCA), wobei CL (SCA) < DP (SCA). Da für die verschiedenen Stärken nur in seltenen Fällen Angaben zum Gewichtsmittelwert CLw vorliegen, wird für eine vereinfachte Diskussion das Zahlenmittel CLn der Kettenlängenverteilung bzw. das Zahlenmittel DPn der Verteilung des Polymerisationsgrades verwendet. Generell ist CLw etwas grösser als CLn, wobei der Unterschied bei A-Seitenketten von Amylopektin nur gering ist, da diese eine enge Verteilung aufweisen, während der Unterschied bei SCA grösser ist und bei LCA sehr gross sein kann.

Die minimale Kettenlänge von Amylose CLn (AM) bzw. der minimale Polymerisationsgrad von Amylose DPn (AM), um mittels Amylose eine Kopplung eines Netzwerks mit der amorphen Phase zu erhalten, liegt etwa bei CLn (AM) ∼ CLn (A-AP), d.h. bei etwa 10 - 20, wobei vorteilhafte Kopplungen bis etwa CLn (AM) ∼ 100 möglich sind. Oberhalb dieses Wertes können auch Netzwerke entstehen, die nicht mit der amorphen Phase gekoppelt sind, d.h. vorwiegend aus Amylose bestehen. Diese Netzwerke weisen bezüglich der gestellten Anforderungen nachteilige Eigenschaften auf, bspw. Opazität bei höheren RF und gegenüber gekoppelten Netzwerken deutlich reduzierte Bruchdehnungen und Zähigkeiten.

Aus diesem Grund ist SCA als NS oder als Anteil von NS besonders geeignet für die Herstellung von mit der amorphen Phase gekoppelten Netzwerken, wobei die Stabilität der die Netzwerkpunkte bildenden Kristallite, d.h. deren Grösse mit abnehmendem CLn (AM) bzw. DPn (AM) abnimmt und die Transparenz zunimmt.

Weiterhin ist auch eine vorteilhafte Kopplung des Netzwerks mit der amorphen Phase beim Einsatz von LCA möglich, wenn deren netzwerkaktive Kettenlänge CLn,na (LCA) im Bereich der Kettenlänge von SCA liegt, d.h. < 100 ist.

In die Kettenlänge CLn (AM) können durch chemische Reaktionen, insbesondere durch Substitution von Hydroxylgruppen der Anhydroglucose-Monomereinheit, durch Oxidation oder Vernetzung, Irregularitäten eingeführt werden. Bei einer chemischen Reaktion im Schwerpunkt eines durch seine Kettenlänge CL charakterisierten Segments wird die netzwerkaktive Kettenlänge von CL auf 1/2CL halbiert. Daher ist es möglich, bspw. durch Hydroxypropylierung oder Acetylierung, auch auf Basis von LCA vorteilhafte Netzwerke zu erhalten. Vorteilhafte Substitutionsgrade (DS) liegen dabei im Bereich von etwa 0.01 - 0.50.

Schliesslich können vorteilhafte Netzwerke basierend auf LCA mit CLn,na > 100 erhalten werden, wenn hierfür durch Verfahrensmassnahmen geeignete Bedingungen geschaffen werden wie bspw. Formgebung bei vergleichsweise tiefen Wassergehalten bzw. tiefen Temperaturen und/oder Wärmebehandlung bei RF im Bereich 20 - 60% und/oder Zugabe von RHS, wobei die (grossräumige) Assoziation der Amylose zu Amylose-Netzwerken unterdrückt und die (kleinräumige) Assoziation der Amylose mit A-Seitenketten von Amylopektin favorisiert wird.

NS wird zu Anteilen in % bezogen auf VS + NS von 1 - 40, vorzugsweise 1.5 - 30, insbesondere 2 - 20, am bevorzugtesten 3 - 15 eingesetzt.

### Aktivierung und Stabilisation der Amylose

Zur Einstellung eines definierten Netzwerks wird NS und gegebenenfalls VS vor oder während dem Mischen mit VS aktiviert und insbesondere stabilisiert. Durch die Aktivierung wird erreicht, dass die in NS enthaltene Amylose mindestens teilweise in amorphem Zustand vorliegt, sodass nach der Mischung mit VS eine Rekombination stattfinden kann, welche zu einem Netzwerk führt. Durch die Stabilisierung wird eine Einflussnahme auf den Beginn der Netzwerkbildung und die Art des Netzwerks ermöglicht.

Bezüglich Aktivierung Stabilisierung, Keimbildung, Unterkühlung und Fremdnukleierungs-mittel wird für detaillierte Angaben auf die Patentanmeldungen WO 03/035026 A2 und WO 03/035044 A2 verwiesen.

### Retrogradationshemmende Stoffe (RHS)

RHS können sowohl für gummielastischen Konfekt auf Basis von VS alleine oder einer Kombination von VS und NS vorteilhaft eingesetzt werden. Sie ermöglichen eine Einflussnahme auf das für die vorliegende Erfindung bedeutsame Retrogradationsverhalten der VS. Die retrogradationshemmende Wirkung dieser Stoffe beruht einerseits auf der Reduktion des für die Stärke als Weichmacher zur Verfügung stehenden Wassers, sowie in der Verdünnung der Stärke-Phase, wodurch in beiden Fällen die Diffusion der Stärke-Makromoleküle erschwert wird, und der hinsichtlich einer Kristallisation bestehenden Inkompatibilität von RHS und Stärke. Beispiele für geeignete RHS sind Zuckerarten (bspw. Sucrose, Saccharose, Fructose, Glucose, Maltose, Glucose Sirupe, Maltosesirupe, Fructosehaltige Stärke Hydrolysate et.), Oligosaccharide, Mischungen von Oligosachariden, insbesondere mit DE > 20, vorzugsweise > 25, noch bevorzugter > 30, am bevorzugtesten > 70, Polydextrose, Maltodextrine, Dextrine, Pyrodextrine, insbesondere mit Verzweigungsgraden Qb > 0.05, vorzugsweise > 0.10, noch bevorzugter > 0.15, am bevorzugtesten > 0.3, Glycogen, Lactose usw..

### Weichmacher

Bezüglich Weichmacher (WM) steht eine breite Palette von bekannten Stärke-Weichmachern zur Auswahl (vergl. bspw. WO 03/035026 A2 oder WO 03/035044 A2) wie bspw. Glycerin, Sorbitol, Maltitol, Mannitol oder Xylitol. Sie können jeweils alleine oder in diversen Mischungen eingesetzt werden. Besonders bevorzugt ist Glycerin.

Zucker, Zuckerarten, Zusatzstoffe, Aromen, Farbstoffe, Überzugsmittel, Additve etc.

Die vorliegende Erfindung stellt ein Spektrum von Stärke-Matrices zur Verfügung, welche für verschiedene Konfekt-Artikel eingesetzt werden können. Diese Stärke-Martices können mit denselben Zuckern, Zuckerarten, Zusatzstoffen, Aromen, Farbsottfe, Additive et. gefüllt werden, wie sie für den jeweiligen Konfekt üblich sind.

Von den Zuckern und Zuckerarten sind dies bzw. Sucrose, Fructose, Dextrose, Maltose, Trehalose, Lactose, Lactulose, Trisaccharide wie Raffinose, Polyole wie Glycerin, Erythritol, Xylitol, Sorbitol, Mannitol, Galacitol, Tagatose, Lactitol, Maltitol, Maltulose, Isomalt, Hydrogenierte Stärke-Hydrolysate, sowie Sirupe wie Glucose-Sirup, High Maltose Corn Sirup, High Fructose Corn Sirup. Weiter können auch sogenannte Low Calorie Süssstoffe wie bzw. Saccharin, Sucralose, Neotame, Aspartam, Alitam, Acesuifam oder natürliche Zucker mit hoher Süsskraft wie bzw. Stevia in Kombination mit herkömmlichen Zuckern und Zuckerarten oder auch alleine eingesetzt werden.

Bezüglich der weiteren Zusätze wie Zitronensäure, Fruchtsirupe, Aromen, Farbstoffe, Fette, Wachse, Füllstoffe, prebiotisch wirksame Stoffe wie bzw. Inulin oder RS, Überzugsmittel, Additve et. wird auf den hinlänglich bekannten Stand der Technik verwiesen. Ebenso wird bezüglich der geometrischen Formen des erfindungsgemässen Konfekts auf den Stand der Technik verwiesen.

### Verfahren

Grundsätzlich können alle für einen jeweiligen Konfekt benötigten Komponenten zusammen aufbereitet werden, bzw. durch Extrusion oder Kochverfahren. Um eine Aufbereitung bei tiefen Wassergehalten zu ermöglichen, ist es gegebenenfalls vorteilhaft, die NS separat aufzubereiten, insbesondere zu lösen und dann mit den weiteren Komponenten zu mischen. Daneben besteht auch die Möglichkeit, zuerst die Stärke-Komponenten aufzubereiten, wobei VS und NS zusammen aufbereitet werden, oder die NS separat aufbereitet und dann mit der VS gemischt wird, wonach die weiteren Konfekt Komponenten zugemischt werden. Ausserdem können die Stärke Komponenten VS und/oder NS auch als Vorprodukt aufbereitet werden und in dieser Form zum Einsatz kommen. Darüber hinaus kann die Herstellung mit den im Bereich Konfekt gängigen Methoden erfolgen, bzw. mittels Giesstechniken (Mogultechnik) oder Formextrusion. Ausserdem kann die Formgebung auch mittels kostengünstiger Spritzgusstechniken durchgeführt werden. Der Wassergehalt in % nach der Herstellung, vor einer allfälligen Konditionierung, liegt im Bereich von 3 - 40, vorzugsweise 4 - 30, noch bevorzugter 5 - 20, am bevorzugtesten 5 - 15.

Bezüglich einer ausführlicheren Beschreibung der Aufbereitung von VS und NS wird auf die Patentanmeldungen WO 03/035026 A2 und WO 03/035044 A2 verwiesen. Bezüglich detaillierter Angaben zum Vorprodukt wird auf die DE-Patentanmeldung vom 28.03.03 mit dem Aktenzeichen 103 14 418.8 verwiesen.

### Beispiele

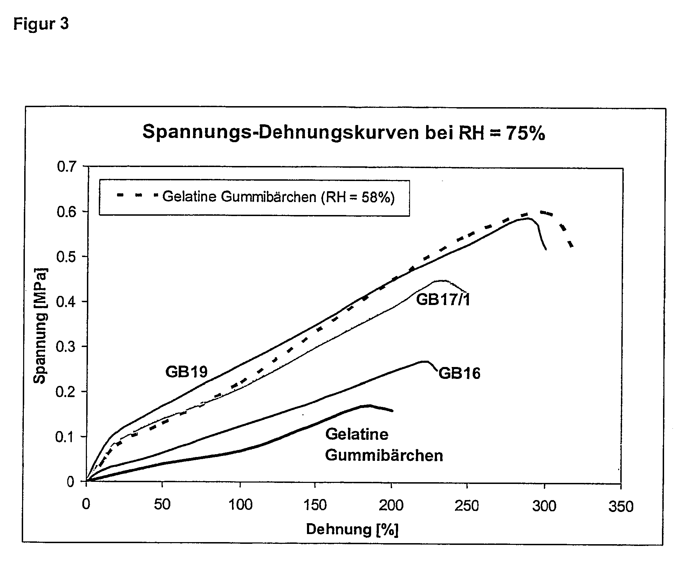

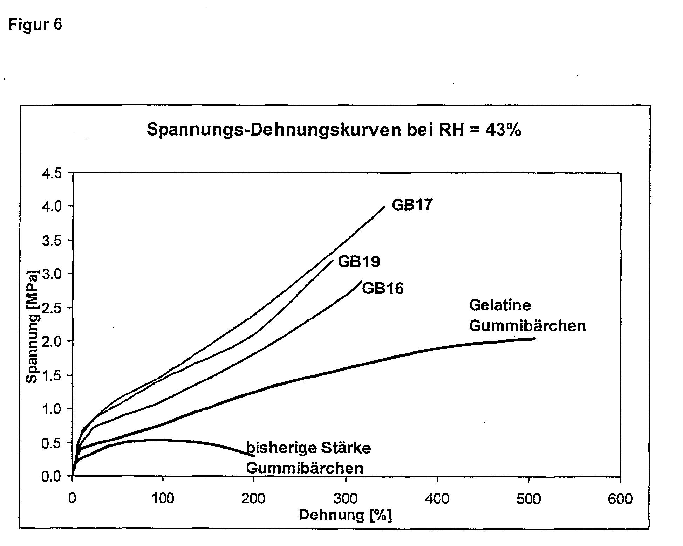

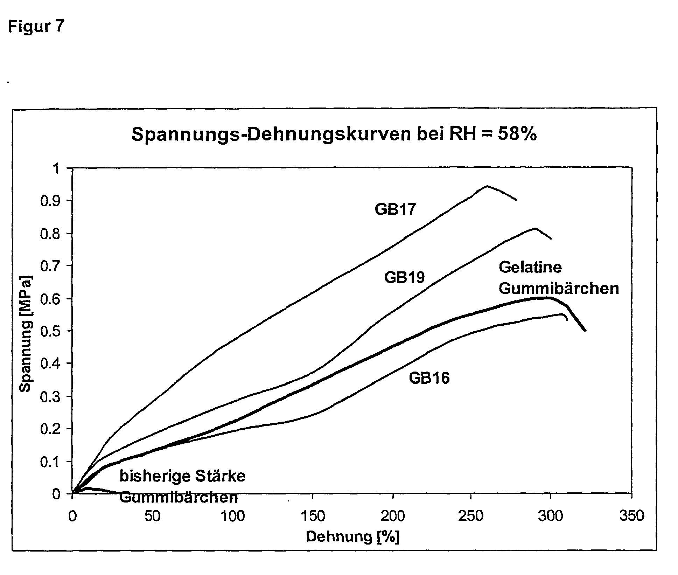

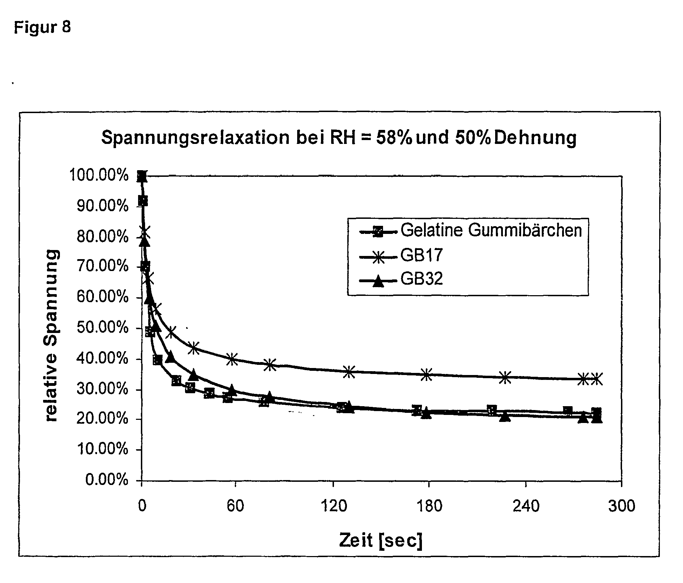

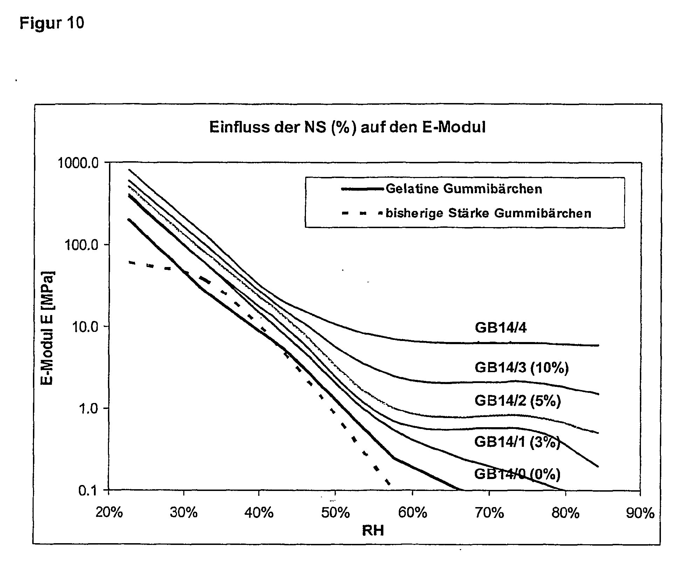

Für die Patentbeispiele wurde gummielastischer Konfekt einerseits mit einem Brabender-Kneter, andererseits mittels eines Mikrowellenofens hergestellt, wobei vergleichbare Resultate erhalten wurden. In beiden Fällen wurde die NS separat aufbereitet und dann mit den restlichen Komponenten gemischt. Dabei wurde für den Mischvorgang mit Wassergehalten im Bereich von 10 - 20% und bei Temperaturen im Bereich von 80 - 130°C gearbeitet. Die Rezepturen der Patentbeispiele sind in Tabelle 1 aufgeführt. Charakteristische Eigenschaften der Rezepturen werden in den Darstellungen 1 -11 gezeigt und sind nachfolgend ausführlich erläutert. Die Beispiele sind nicht einschränkend zu verstehen.

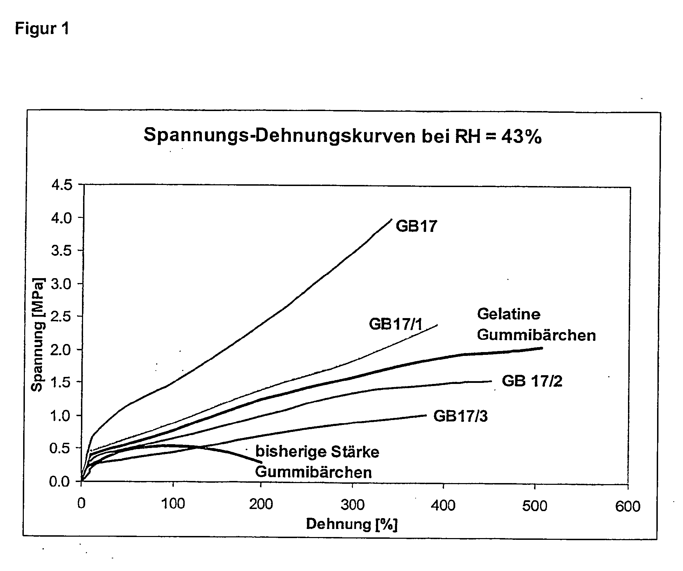

1. In Figur 1 sind die aus dem Zugversuch erhaltenen Spannungs-Dehnungskurven von Proben, die mit der relativen Luftfeuchtigkeit RH = 43% im Gleichgewicht sind, für verschiedene Rezepturen von gummielastischem Konfekt auf Stärkebasis (GSB) basierend auf einem NS enthaltenden Netzwerk (dessen Verknüpfungspunkte sowohl durch Homo- als auch durch Heterokristallite gebildet werden), sowie für Gelatine Gummibärchen (GGB) und bisherige Stärke (Gummi)-Bärchen (SB) wiedergegeben. Die entsprechenden GSB Rezepturen sind in Tabelle 1 aufgeführt. Es wird gezeigt, dass die Spannungs-Dehnungskurve der Basisrezeptur GB17 durch eine Variation des Weichmachergehaltes in einem weiten Bereich eingestellt und sowohl qualitativ als auch quantitativ an die Spannungs-Dehnungskurve von GGB angepasst werden kann, während SB sowohl qualitativ als auch quantitativ ein unterschiedliches Verhalten zeigt.
   Die Spannungs-Dehnungskurven von GSB und GGB sind typisch für gummielastisches Verhalten (gummiartige Textur), während die Spannungs-Dehnungskurve von SB ein plastisches Fliessen widerspiegelt (viskose Textur).

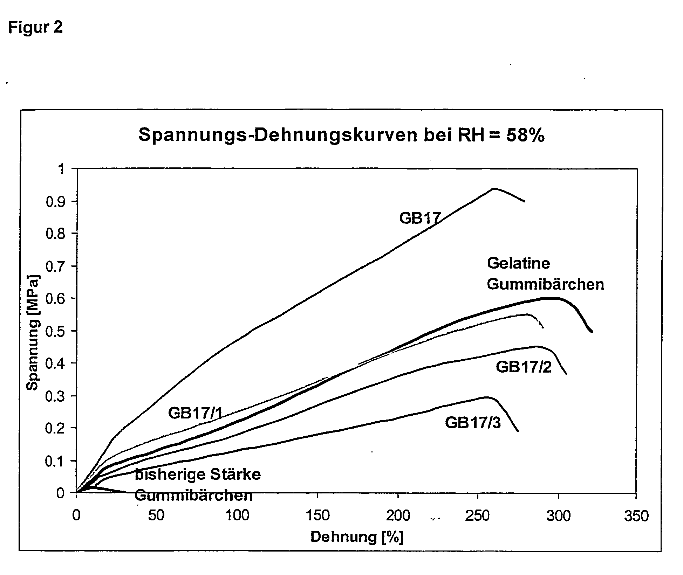

2. In Figur 2 sind die Spannungs-Dehnungskurven derselben Proben im Gleichgewicht mit RH = 58% wiedergegeben. Die Spannungs-Dehnungskurven von GSB und GGB sind qualitativ vergleichbar mit den Resultaten bei RH = 43%, liegen jedoch infolge des höheren Wassergehalts bei tieferen Festigkeiten, während die Festigkeiten von SB im Zugversuch bei dieser Luftfeuchtigkeit kaum mehr messbar sind (ausgeprägtes Fliessen bei geringster Beanspruchung). In Anbetracht der Resultate von Figur 2 ist es nicht erstaunlich, dass GGB und SB eine gänzlich andere Textur und damit ein gänzlich anderes Verhalten beim Verzehr (Bissverhalten) aufweisen (die Wassergehalte von GGB und SB beim Verkauf entsprechen etwa dem Gleichgewichtswassergehalt bei RH = 58%). Gerade das bei GGB so beliebte gummiartige Verhalten kann von SB auch nicht annährend wiedergegeben werden. Im Unterschied dazu ermöglichen GSB eine mit GGB praktisch identische Textur (vergl. GB17/1).
3. Bei einer weiteren Erhöhung der Luftfeuchtigkeit auf RH = 75% (Figur 3) wird die Festigkeit und die Bruchdehnung von GGB deutlich reduziert, während SB unter diesen Bedingungen im Zugversuch nicht mehr messbar sind. Bei RH = 75% kommt der viskose Charakter der SB Textur noch deutlicher zum Ausdruck, da die Proben bereits unter ihrem Eigengewicht zerfliessen. Die GGB sind bei RH = 75% gegenüber RH = 58% sehr viel weicher, weisen jedoch noch immer eine gummiartige Textur auf. Die Textur von GSB hingegen unterscheidet sich bei RH = 75% nur geringfügig von den Verhältnissen bei RH = 58%, der Verlauf der Spannungs-Dehnungskurve von GB17/1 bei RH = 75% ist bis auf eine etwas reduzierte Bruchdehnung sogar fast identisch mit der Spannungs-Dehnungskurve von GGB bei RH = 58%. Die Stabilisierung der Textur von GSB zu hohen Luftfeuchtigkeiten bzw. Wassergehalten hin ist eine Folge des inhärenten Netzwerks. Somit weisen GSB nicht nur eine mit GGB vergleichbare Textur auf, die Eigenschaften von GSB sind darüber hinaus sogar weniger empfindlich gegenüber Variationen von RH bzw. des Wassergehalts als GGB.

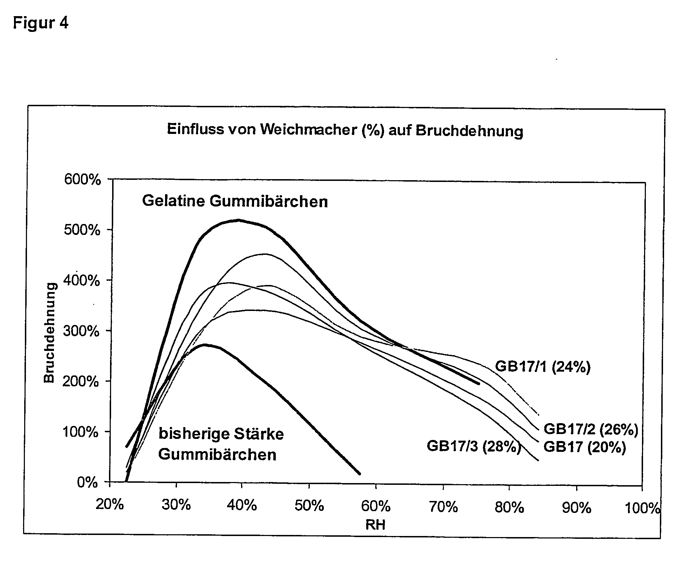

4. In Figur 4 ist der Verlauf der Bruchdehnungen von GGB, GSB und SB in Funktion der relativen Luftfeuchtigkeit RH im Gleichgewicht wiedergegeben. Die Kurven zeigen jeweils ein Maximum im Bereich RH = 35 - 45%, wobei in diesem Bereich GB die höchsten Dehnungen erreicht und SB die tiefsten, während die Dehnungen von SGB dazwischen liegen, insbesondere näher bei den Dehnungen von GGB. Im Bereich von RH = rund 60%, wobei diese Luftfeuchtigkeit im Gleichgewicht ist mit dem Wassergehalt, womit die GGB und die SB in den Verkauf gelangen, sind die Bruchdehnungen von GGB und GSB nahezu vergleichbar, während SB hier nur noch minimale Dehnungen aufweist. Charakteristisch für GSB ist neben den im Vergleich mit SB sehr hohen maximalen Dehnungen auch ein weiter Bereich von rund 25% < RH < 85%, worin Dehnungen > 100% erhalten werden, während solche Dehnungen für SB nur im Bereich von rund 25% < RH < 50% erhalten werden. Auch bezüglich dieser Eigenschaft ist eine klare Unterscheidung zwischen GSB und SB gegeben, wobei GSB gegenüber SB nicht nur den Vorteil einer gummielastischen Textur, sondern auch den Vorteil eines sogar gegenüber Gelatine hinsichtlich RH breiteren Anwendungsbereichs aufweisen.

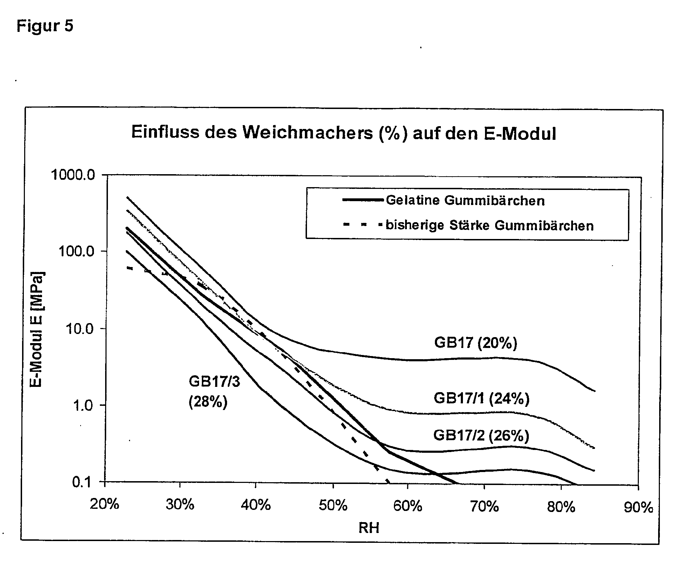

5. In Figur 5 ist der Verlauf der E-Moduli für GGB, GSB und SB in Funktion der relativen Luftfeuchtigkeit RH in halblogarithmischer Auftragung wiedergegeben. Während der Logarithmus der E-Moduli von GGB mit RH nahezu linear abnimmt, kann für GSB oberhalb rund 50% RH ein Plateau eingestellt werden. Dies korrespondiert mit einer in etwa gleich bleibenden Textur zu hohen Luftfeuchtigkeiten hin und ist durch das Vorliegen eines Netzwerks bedingt. Das Niveau des Plateaus kann für eine ausgewählte VS mittels einer Variation des Weichmachergehaltes in einem weiten Bereich eingestellt werden. Ausserdem wird durch eine Erhöhung des Weichmachergehalts der lineare Bereich des E-Modul-Verlaufs zu tieferen Luftfeuchtigkeiten verschoben. Zucker und Zuckerarten, wie sie in Konfekt üblich sind, wirken bezüglich des Einflusses auf den E-Modul-Verlauf in etwa analog wie Weichmacher, jedoch ist deren Einfluss geringer. Hieraus wird deutlich, dass für eine ausgewählte VS mittels des Weichmachergehalts und weniger ausgeprägt mittels des Gehalts an Zucker und Zuckerarten ein weiter Bereich von gummielastischen Texturen von weich bis hart erhalten werden kann, wodurch der Einsatzbereich von GSB über den Ersatz von Gelatine bei Gummibärchen hinausgeht. Weitere Konfekt-Texturen sind einstellbar, die charakteristischerweise ein Plateau des E-Modul-Verlaufs bei höheren Luftfeuchtigkeiten bzw. Wassergehalten aufweisen. Bzw. zeigt die Rezeptur GB17 eine mit Gummipastillen vergleichbare hart gummielastische Textur.
6. Aus Figur 6 und 7 wird anhand der Rezepturen GB16 und GB19 (enthaltend jeweils keine NS) ersichtlich, dass auch Netzwerke, dessen Verknüpfungspunkte durch Homokristallite gebildet werden, eine mit GGB vergleichbare Textur aufweisen können.
   Allerdings ist bei diesen Rezepturen die Stabilisierung der Textur zu hohen Luftfeuchtigkeiten hin weniger ausgeprägt und liegt das E-Modul Plateau auf niedrigerem Niveau.
7. Zum Vergleich des gummielastischen Verhaltens von erfindungsgemässem Konfekt mit Gelatine wurden Spannungs-Relaxationsmessungen durchgeführt. Hierzu wurden Proben, die sich im Gleichgewicht mit RH = 58% befanden, rasch auf 50% gedehnt und sodann in Funktion der Zeit die nachlassende Spannung gemessen. In Figur 8 sind die Resultate für Gelatine, sowie für eine harte gummielastische Rezeptur GB17 und für eine weiche gummielastische Textur GB32 aufgezeigt. Entsprechende Messungen konnten für SB nicht durchgeführt werden, da SB bei RH = 58% eine Bruchdehnung nahe bei 0 aufweisen. Charakteristisch für gummielastisches Verhalten ist eine Relaxationskurve, welche nach einem anfänglich schnellen Abfall sich asymptotisch einem Plateau nähert. Die Höhe des Plateaus kann als Grad der Gummielastizität interpretiert werden. In diesem Sinne weist GB32 ein mit GGB nahezu identisches Relaxationsverhalten auf, während GB17 sogar einen höheren Grad an Gummielastizität zeigt.

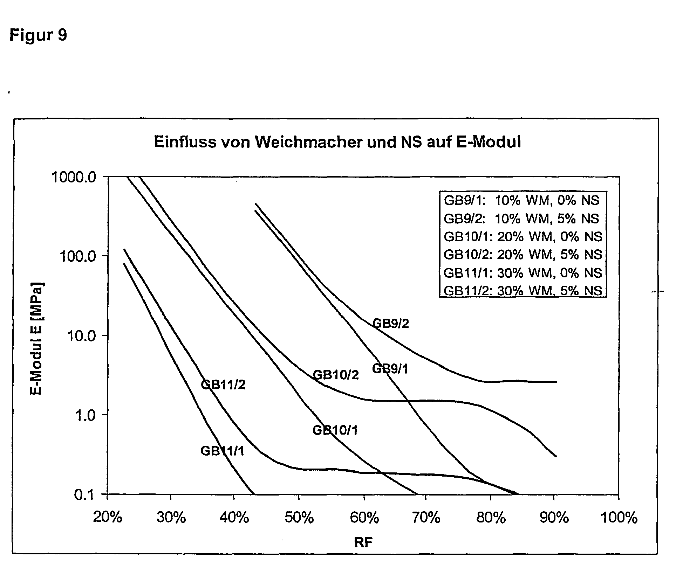

8. In Figur 9 ist der Einfluss von Weichmacher und NS auf den E-Modul in halblogarithmischer Darstellung für Rezepturen basierend auf acetyliertem Distärkeadipat von Waxy Mais wiedergegeben. Die Rezepturen enthaltend NS weisen ein E-Modul Plateau auf, das sich wie im Falle von GB11/2 über einen weiten Bereich von RH von rund 35% erstreckt, während die Rezepturen ohne NS nur ein Abflachen des E-Moduls in den Plateau Regionen zeigen. Auch hier kommt wiederum der stabilisierende Effekt des Netzwerks, das in diesen Fällen mindestens teilweise Heterokristallite umfasst, zum Ausdruck. Es wird deutlich, dass mittels einer Variation des Weichmachergehalts einerseits eine Translation entlang der RH-Achse ausgelöst wird und andererseits für die Rezepturen enthaltend einen Anteil an NS auch eine Translation entlang der E-Modul-Achse assoziiert ist, wobei das Niveau des E-Modul-Plateau mit einem Faktor bis zu 20 variiert. Somit kann durch die Wahl des Weichmachergehaltes die E-Modul-Kurve innerhalb eines weiten Bereiches des E-Modul/RF-Diagramms platziert werden, wodurch sich eine Möglichkeit zur Einstellung gewünschter gummielastischer Texturen von hart (GB11/2) bis weich (GB9/2) ergibt. Allerdings ist.die Translation entlang der RF-Achse nicht unabhängig von der Translation entlang der E-Modul-Achse für NS enthaltende Rezepturen. Wünschenswert zur Erzeugung eines noch grösseren Spektrums von gummielastischen Texturen ist eine Möglichkeit zur unabhängigen Translation entlang der beiden Achsen von E-Modul und RH.
9. Dies wird durch die Art und den Gehalt der NS ermöglicht, wie die Figur 10 aufzeigt. Eine Erhöhung des Gehalts an NS äussert sich in einer Verschiebung des E-Modul-Plateaus zu höheren E-Moduli, wobei eine Erhöhung des Gehalts an NS von 3% auf 15% das E-Modul-Plateau um einen Faktor von rund 10 anhebt, während die Translation entlang der RH-Achse vergleichsweise gering ist. Somit kann also mit den Parametern des Weichmachergehalts und des Gehalts an NS das Niveau des E-Modul-Plateaus und dessen Lage bezüglich RH in einem weiten Bereich auf einen gewünschten Wert eingestellt werden, während gleichzeitig auch der Bereich wo der Logarithmus des E-Moduls linear mit RH abnimmt entlang beider Achsen Parameter des Gehalts festgelegt werden kann. Wenn weiter auch die ausgewählte VS variiert wird, ergibt sich ein noch grösserer Spielraum. Diese Variationsmöglichkeiten betreffen jedoch nicht nur den E-Modul-Verlauf als eine wichtige Kenngrösse der Textur, auch das Dehnvermögen ist einstellbar, wobei bzw. ein hoher Gehalt an NS im Allgemeinen das Dehnvermögen reduziert und ein hoher Substitutionsgrad der VS das Dehnvermögen erhöht. Weiter kann auch das Bruchverhalten mit den zur Verfügung stehenden Parametern von zäh bis spröd und die Klebrigkeit von stark klebrig bei tiefen Netzwerkdichten bis nicht klebrig bei hohen Netzwerkdichten sowie die Transparenz von opak bei grossen Homo- bzw. Heterokristalliten bis transparent bei kleinen Heterokristalliten eingestellt werden. Die Kristallitgrösse wird bei Rezepturen ohne NS-Anteil über den Substitutionsgrad der VS, bei Rezepturen mit NS-Anteil ausserdem über den Polymerisationsgrad der NS und die Kristallisationskinetik geregelt.

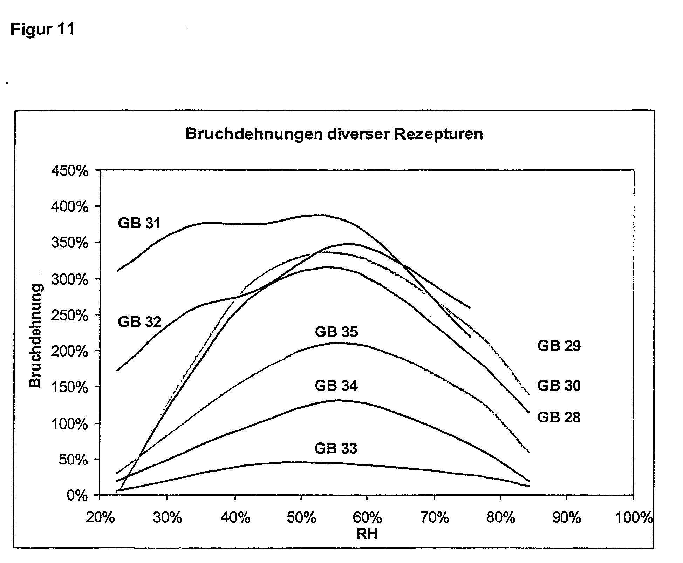

10. In Figur 11 sind die Bruchdehnungen diverser Rezepturen in Funktion der relativen Luftfeuchtigkeit wiedergegeben. Der Vergleich von GB28 und GB29 zeigt den Einfluss eines erhöhten Anteils an Zucker und High Maltose Sirup, wobei höhere Dehnungen erhalten werden. Der Vergleich von GB28, GB30 und GB32 zeigt den Einfluss einer Reduktion des NS-Gehaltes, wobei eine Reduktion des NS-Gehaltes etwas höhere Dehnungen erlaubt, wobei der Unterschied zwischen GB28 und GB30 jedoch vergleichsweise gering ist, während ein Anteil von 0% bei GB32 die Bruchdehnung insbesondere bei tiefer RH deutlich anhebt. GB31 weist gegenüber GB28 einen erhöhten Weichmachergehalt auf, wodurch sehr hohe Dehnungen auch bei tiefer RH erhalten werden können.

Bei der Rezeptur GB33 wurde eine dünnkochende sauer abgebaute und veresterte Stärke in Kombination mit NS eingesetzt. Die Dehnungen werden dabei deutlich reduziert, und es liegt eine kurze Textur vor, wie sie bzw. für Gelee geeignet ist. Bei der Rezeptur GB34 wurde dieselbe Stärke zu 80% mit einer höhermolekularen substituierten Stärke kombiniert, während bei der Rezeptur GB35 eine dünnkochende acetylierte/oxidierte Stärke zu 60% mit einer höhermolekularen substituierten Stärke kombiniert wurde. In beiden Fällen wurde 10% NS eingesetzt, somit mindestens teilweise Heterokristallite erhalten. Die gemessenen Bruchdehnungen zeigen, dass durch solche Kombinationen Bruchdehnungskurven erhalten werden, die zwischen den Bruchdehnungskurven von gummielastischem Konfekt wie bzw. bei GB28 und GB30 und Gelee-Konfektwie bei GB33 einstellbar sind. Die entsprechenden Texturen liegen zwischen den Texturen von Gummibonbons und Gelee. Es handelt sich dabei um neuartige Texturen.

**Tabelle 1:**

| Rezepturen (die angegebenen % Werte beziehen sich jeweils auf das Trockengewicht und den Anteil VS; WM: Weichmacher, HMS: High Maltose Sirup, NS1: DPn = ca. 20, NS2: DPn = ca. 100). | | | | | | |
|---|---|---|---|---|---|---|
| **Nr.** | **VS** | **NS** | **NS** | **WM** | **HMS** | **Zucker** |
| | | | **[%]** | **[%]** | **[%]** | **[%]** |
| | | | | | | |
| G**B9/1** | Acetyliertes Distärkeadipat (Waxy Mais) | NS2 | 0 | 10 | 20 | 30 |
| **GB9/2** | Acetyliertes Distärkeadipat (Waxy Mais) | NS2 | 5 | 10 | 20 | 30 |
| **GB10/1** | Acetyliertes Distärkeadipat (Waxy Mais) | NS2 | 0 | 20 | 20 | 30 |
| **GB10/2** | Acetyliertes Distärkeadipat (Waxy Mais) | NS2 | 5 | 20 | 20 | 30 |
| **GB11/1** | Acetyliertes Distärkeadipat (Waxy Mais) | NS2 | 0 | 30 | 20 | 30 |
| **GB11/2** | Acetyliertes Distärkeadipat (Waxy Mais) | NS2 | 5 | 30 | 20 | 30 |
| | | | | | | |
| **GB14/0** | Acetyliertes Distärkephosphat (Tapioca) | NS1 | 0 | 20 | 20 | 30 |
| **GB14/1** | Acetyliertes Distärkephosphat (Tapioca) | NS1 | 3 | 20 | 20 | 30 |
| **GB14/2** | Acetyliertes Distärkephosphat (Tapioca) | NS1 | 5 | 20 | 20 | 30 |
| **GB14/3** | Acetyliertes Distärkephosphat (Tapioca) | NS1 | 10 | 20 | 20 | 30 |
| **GB14/4** | Acetyliertes Distärkephosphat (Tapioca) | NS1 | 15 | 20 | 20 | 30 |
| | | | | | | |
| **GB16** | Hydroxypropyliertes Distärkephosphat (Tapioka) | Kein | - | 20 | 25 | 40 |
| | | | | | | |
| **GB17** | Hydroxypropyliertes Distärkephosphat (Tapioka) | NS1 | 5 | 20 | 30 | 45 |
| **GB17/1** | Hydroxypropyliertes Distärkephosphat (Tapioka) | NS1 | 5 | 24 | 30 | 45 |
| **GB17/2** | Hydroxypropyliertes Distärkephosphat (Tapioka) | NS1 | 5 | 26 | 30 | 45 |
| **GB17/3** | Hydroxypropyliertes Distärkephosphat (Tapioka) | NS1 | 5 | 28 | 30 | 45 |
| | | | | | | |
| **GB19** | Hydroxypropylierte Stärke (Kartoffel) | Kein | - | 20 | 25 | 40 |
| | | | | | | |
| **GB28** | Hydroxypropyliertes Distärkephosphat (Tapioka) | NS1 | 10 | 20 | 31 | 47 |
| **GB29** | Hydroxypropyliertes Distärkephosphat (Tapioka) | NS1 | 10 | 20 | 37 | 56 |
| **GB30** | Hydroxypropyliertes Distärkephosphat (Tapioka) | NS2 | 5 | 20 | 31 | 47 |
| **GB31** | Hydroxypropyliertes Distärkephosphat (Tapioka) | NS1 | 10 | 30 | 31 | 47 |
| **GB32** | Hydroxypropyliertes Distärkephosphat (Tapioka) | Kein | 0 | 20 | 30 | 45 |
| **GB33** | Säure hydrolysierte veresterte Kartoffelstärke | NS1 | 10 | 20 | 30 | 45 |
| **GB34** | Hydroxypropyliertes Distärkephosphat (Tapioka) + Säure hydrolysierte veresterte Kartoffelstärke (80%) | NS1 | 10 | 20 | 30 | 45 |
| **GB35** | Hydroxypropyliertes Distärkephosphat (Tapioka) + Acetylierte/oxidierte Kartoffelstärke (60%) | NS1 | 10 | 20 | 30 | 45 |

## Patentansprüche

1. Konfekt mit gummielastischer Textur auf Basis einer Stärke-Matrix, wobei die Matrix eine vorliegende Stärke (VS) mit einer geringen bis verschwindenden Neigung zur Retrogradation aufweist, **dadurch gekennzeichnet, dass** die VS einen Amylosegehalt in % von weniger als 20 hat und/oder eine modifizierte, insbesondere substituierte Stärke ist; dass die VS einen Polymerisationsgrad von mehr als 1000 hat; und dass die Herstellung des Konfektes durch Formextrusion erfolgt.

2. Konfekt nach Anspruch 1, **dadurch gekennzeichnet, dass** die Matrix ausserdem eine netzwerkfähige Stärke (NS) aufweist, wobei die Netzwerkelemente der Stärke-Matrix durch mittels Heterokristallisation der VS mit der NS gebildete Heterokristallite gebildet sind.

3. Konfekt auf Basis einer Stärke-Matrix nach Anspruch 1 oder 2, **dadurch gekennzeichnet, dass** der Konfekt ein Plateau des E-Moduls als Funktion der relativen Luftfeuchtigkeit aufweist.

4. Konfekt auf Basis einer Stärke-Matrix nach einem der vorangehenden Ansprüche, **dadurch gekennzeichnet, dass** der Konfekt im Gleichgewicht mit einer relativen Luftfeuchtigkeit RH von 55 - 70% bei einer Dehnung von 50% eine Relaxationsspannung in % von > 10 aufweist.

5. Konfekt auf Basis einer Stärke-Matrix nach einem der vorangehenden Ansprüche, **dadurch gekennzeichnet, dass** der Konfekt eine Bruchdehnung in % von > 50 in einem Intervall der relativen Luftfeuchtigkeit RH in % von > 30 aufweist.

6. Konfekt auf Basis einer Stärke-Matrix nach einem der vorangehenden Ansprüche, **dadurch gekennzeichnet, dass**
a) die Stärke-Matrix ein Netzwerk aufweist, das durch Homo- und/oder Heterokristallisation gebildet worden ist; und
b) mindestens eine vorliegende Stärke mit DPn > 1000 aufweist; und/oder
c) mindestens eine netzwerkfähige Stärke mit DPn < 300 aufweist.

7. Konfekt auf Basis einer Stärke-Matrix nach einem der vorangehenden Ansprüche, **dadurch gekennzeichnet, dass**
a) der Konfekt einen Gehalt an Weichmacher in % von 0 - 50 aufweist; und
b) der Konfekt einen Gehalt an Zucker und Zuckerarten in % von 1 - 90 aufweist; und
c) der Konfekt gegebenenfalls einen Anteil an netzwerkfähiger Stärke in % von 1- 50 aufweist,
wobei die Angaben in % bei a), b) und c) sich jeweils auf die Trockengewichte und auf den Anteil der vorliegenden Stärke beziehen.

8. Konfekt auf Basis einer Stärke-Matrix nach einem der vorangehenden Ansprüche, **dadurch gekennzeichnet, dass** der Konfekt mindestens einen retrogradationshemmenden Stoff aufweist, insbesondere Glycogen oder ein Dextrin mit einem Verzweigungsgrad Qb > 0.05.

9. Konfekt auf Basis einer Stärke-Matrix nach einem der vorangehenden Ansprüche, **dadurch gekennzeichnet, dass** der Konfekt mittels eines Vorprodukts enthaltend mindestens VS und/oder NS hergestellt wird, wobei bei der Herstellung des Vorprodukts die Ausbildung eines Netzwerks unterdrückt und der amorphe Zustand eingefroren wurde.

10. Verfahren zur Herstellung des Konfekts gemäss einem der vorangehenden Ansprüche, **dadurch gekennzeichnet, dass** die Herstellung mittels Formextrusion erfolgt, wobei gegebenenfalls im Anschluss an die Formextrusion eine Konditionierung durchgeführt wird.

11. Verwendung von Konfekt auf Basis einer Stärke-Matrix nach einem der vorangehenden Ansprüche als Konfekt im Bereich Gummibonbon, Gelee-Zuckerwaren, Pastille oder hart und weich gummielastischer Konfekt, insbesondere als Ersatz für Konfekt auf Basis von Gelatine, Pektin, Gummi Arabikum oder Agar, insbesonderst als Gummibärchen, Gummibonbon, Gelee oder Pastille.

## Claims

1. Confectionery having rubbery-elastic texture based on a starch matrix, wherein the matrix has an existing starch (VS) having a low to vanishing tendency to retrogradation, **characterized in that** the VS has an amylose content in % of less than 20 and/or is a modified, in particular substituted, starch; **in that** the VS has a degree of polymerization of greater than 1000; and **in that** the production of the confectionery proceeds via extrusion moulding.

2. Confectionery according to Claim 1, **characterized in that** the matrix in addition has a network-forming starch (NS), wherein the network elements of the starch matrix are formed by heterocrystallites formed by means of heterocrystallization of the VS with the NS.

3. Confectionery based on a starch matrix according to Claim 1 or 2, **characterized in that** the confectionery has a plateau of the modulus of elasticity as a function of the relative humidity.

4. Confectionery based on a starch matrix according to one of the preceding claims, **characterized in that** the confectionery, in equilibrium with a relative humidity RH of 55-70%, has a relaxation tension in % of > 10 at an extension of 50%.

5. Confectionery based on a starch matrix according to one of the preceding claims, **characterized in that** the confectionery has an elongation at break in % of > 50 in an interval of relative humidity RH in % of > 30.

6. Confectionery based on a starch matrix according to one of the preceding claims, **characterized in that**
a) the starch matrix has a network which has been formed by homo- and/or heterocrystallization; and
b) has at least one existing starch having DPn > 1000; and/or
c) has at least one network-forming starch having DPn < 300.

7. Confectionery based on a starch matrix according to one of the preceding claims, **characterized in that**
a) the confectionery has a plasticizer content in % of 0-50; and
b) the confectionery has a content of sugar and sugars in % of 1-90; and
c) the confectionery, if appropriate, has a fraction of network-forming starch in % of 1-50,
wherein the figures in % under a), b) and c) in each case relate to the dry weights and to the fraction of the existing starch.

8. Confectionery based on a starch matrix according to one of the preceding claims, **characterized in that** the confectionery has at least one retrogradation-inhibiting material, in particular glycogen, or a dextrin having a degree of branching Qb > 0.05.

9. Confectionery based on a starch matrix according to one of the preceding claims, **characterized in that** the confectionery is produced by means of a preproduct containing at least VS and/or NS, wherein, in the production of the preproduct, the formation of a network was suppressed and the amorphous state was frozen in.

10. Process for producing the confectionery according to one of the preceding claims, **characterized in that** the production proceeds by means of extrusion moulding, wherein, if appropriate, subsequently to the extrusion moulding, conditioning is carried out.

11. Use of confectionery based on a starch matrix according to one of the preceding claims as confectionery in the sector of gum sweets, jelly sugar products, pastilles or hard and soft rubbery-elastic confectionery, in particular as replacement for confectionery based on gelatin, pectin, gum Arabic or agar, most particularly as bear gums, gum sweets, jelly or pastilles.

## Revendications

1. Confiserie à texture élastique de gomme, à base d'une matrice d'amidon, la matrice comportant un amidon présent (AP) ayant une tendance faible à nulle à la rétrogradation, **caractérisée en ce que** l'AP a une teneur en amylose de moins de 20 % et/ou est un amidon modifié, en particulier substitué ; **en ce que** l'AP a un degré de polymérisation de plus de 1 000 ; et **en ce que** la production de la confiserie s'effectue par extrusion-formage.

2. Confiserie selon la revendication 1, **caractérisée en ce que** la matrice comporte en outre un amidon apte à la réticulation (AR), les éléments réticulables de la matrice d'amidon étant constitués d'hétérocristallites formés par hétérocristallisation de l'AP avec l'AR.

3. Confiserie à base d'une matrice d'amidon selon la revendication 1 ou 2, **caractérisée en ce que** la confiserie présente un plateau du module d'élasticité en tant que fonction de l'humidité relative de l'air.

4. Confiserie à base d'une matrice d'amidon selon l'une quelconque des revendications précédentes, **caractérisée en ce qu'**en équilibre avec une humidité relative de l'air HR de 55-70 %, la confiserie présente à un allongement de 50 % une tension de relaxation en % de > 10.

5. Confiserie à base d'une matrice d'amidon selon l'une quelconque des revendications précédentes, **caractérisée en ce que** la confiserie présente un allongement à la rupture en % de > 50 dans une plage de l'humidité relative de l'air HR en % de > 30.

6. Confiserie à base d'une matrice d'amidon selon l'une quelconque des revendications précédentes, **caractérisée en ce que**
a) la matrice d'amidon présente un réseau qui a été formé par homo- et/ou hétérocristallisation ; et
b) au moins un amidon présent à DPₙ < 1 000 ; et/ou
c) au moins un amidon apte à la réticulation à DPₙ < 300.

7. Confiserie à base d'une matrice d'amidon selon l'une quelconque des revendications précédentes, **caractérisée en ce que**
a) la confiserie a une teneur en plastifiant de 0 à 50 % ; et
b) la confiserie a une teneur en sucre et sucres de 1 à 90 % ; et
c) la confiserie a éventuellement une teneur en amidon apte à la réticulation de 1 à 50 %,
les données en % dans a), b) et c) se rapportant chacune aux poids secs et à la quantité de l'amidon présent.

8. Confiserie à base d'une matrice d'amidon selon l'une quelconque des revendications précédentes, **caractérisée en ce que** la confiserie comporte au moins une substance inhibant la rétrogradation, en particulier du glycogène ou une dextrine ayant un degré de ramification Q_{b} > 0,05.

9. Confiserie à base d'une matrice d'amidon selon l'une quelconque des revendications précédentes, **caractérisée en ce que** la confiserie est produite au moyen d'un pré-produit contenant au moins AP et/ou AR, lors de la préparation du pré-produit la formation d'un réseau ayant été réprimée et l'état amorphe ayant été gelé.

10. Procédé pour la fabrication de la confiserie selon l'une quelconque des revendications précédentes, **caractérisé en ce que** la fabrication s'effectue par extrusion-formage, un conditionnement étant éventuellement effectué à la suite de l'extrusion-formage.

11. Utilisation de la confiserie à base d'une matrice d'amidon selon l'une quelconque des revendications précédentes, en tant que confiserie dans le domaine des bonbons-gommes, des sucreries-gelées, des pastilles ou confiserie à élasticité de gomme dure ou molle, en particulier en tant que succédané d'une confiserie à base de gélatine, pectine, gomme arabique ou agar-agar, en particulier en tant que tablettes de gomme, bonbon-gomme, gelée ou pastille.
